# EUROPÄISCHE PATENTSCHRIFT

(11) **EP 2 862 539 B1**
(45) Veröffentlichungstag und Bekanntmachung des Hinweises auf die Patenterteilung: **22.04.2020**
(21) Anmeldenummer: 14184493.6
(22) Anmeldetag: 11.09.2014
(51) Int. Cl.: A61C 13/00, A61C 13/36

(54) **Dentale Transferschablone**
Dental positioning device
Dispositif de positionnement dentaire

(30) Priorität: 17.10.2013 EP 13189179
(43) Veröffentlichungstag der Anmeldung: 22.04.2015
(60) Teilanmeldung: 19153351.2
(73) Patentinhaber: Ivoclar Vivadent AG, 9494 Schaan (LI)
(72) Erfinder: Hagenbuch, Konrad, 9469 Haag (CH); Frei, Christian, 39025 Naturns (IT); Foser, Hans-Peter, 9496 Balzers (LI)
(74) Vertreter: Baronetzky, Klaus

(56) Entgegenhaltungen:
- DE-A1- 3 715 106
- US-A- 2 720 025
- US-A- 4 299 573
- US-A1- 2012 276 502

## Beschreibung

Die Erfindung betrifft eine Dental-Transferschablonenanordnung gemäß dem Oberbegriff von Anspruch 1.

Bei mittels CAD/CAM gefertigten Prothesen ist es notwendig, künstliche Zähne mit einer Prothesenbasis zu verkleben. Die künstlichen Zähne können sowohl konventionell (industriell) hergestellt als auch mittels CAD/CAM gefertigt sein und aus unterschiedlichen Materialien bestehen.

Um die künstlichen Zähne dauerhaft in der Kavität einer Prothesenbasis zu verkleben, ist eine korrekte Positionierung des jeweiligen Zahnes relativ zur Prothesenbasis notwendig. Dabei ist jeder Zahn oder jede Zahngruppe einzeln und manuell auf die korrekte Passung zu kontrollieren und anschließend einzukleben.

Für die Überprüfung ist bereits eine sogenannte Transferschablone vorgeschlagen worden. Eine derartige Transferschablone ist eine insbesondere per CAD/CAM hergestellte Negativform, wobei Ausnehmungen zum Lagern der Zähne vorgesehen sind. Die Zähne und/oder Zahngruppen werden in den Ausnehmungen der Schablone vorläufig gelagert und zum Verkleben in den Kavitäten der Prothesenbasis dorthin übertragen. Vor/bei dem Verkleben wird mittels der Schablone eine sichere und korrekte Positionierung der Zähne in den Kavitäten der Prothesenbasis gewährleistet.

Eine solche Transferschablone kann von der CAD/CAM-Vorrichtung basierend auf Scan- und CAD- Daten erzeugt werden, die beiden Daten jeweils aus einem dreidimensionalen Scan einer Mundsituation eines Patienten und aus einer Schablonebibliothek in der CAD-Software gewonnen sind. Ein entsprechende Prothesenbasis wird insbesondere von der gleichen CAD/CAM-Vorrichtung basierend auf insbesondere den gleichen Scandaten und den CAD-Daten aus einer Prothesenbasisbibliothek in der CAD-Software erzeugt, so dass die künstlichen Zähne mit Hilfe der Transferschablone transferiert und in der Kavität der Prothesenbasis positioniert und eingeklebt werden können.

Eine derartige Dental-Transferschablone ist aus der WO 2012/155161 A1 bekannt. Gemäß der WO 2012/155161 A1 werden die Prothesenzähne mittels einer dort als "Hilfshaltevorrichtung" bezeichneten Transferschablone in eine definierte Position gebracht und dort gehalten.

Eine weitere derartige Dental-Transferschablone ist aus der EP 2 030 590 A1 bekannt. Jeder einzelne Prothesenzahn wird vorläufig mittels Wachs oder Harz in der Ausnehmung der dortigen Transferschablone gehalten. Die dortige Stange 18 der Transferschablone ermöglicht eine manuelle Orientierung und Positionierung der Zähne in der Kavitäten der Prothesenbasis.

Eine weitere Dental-Transferschablone ist aus der DE 37 15 106 A1 bekannt.

Solche und auch die anderen heutigen Dental-Transferschablonen vermögen jedoch die künstlichen Zähne nur entweder beim Oberkiefer oder beim Unterkiefer an die jeweilige Prothesenbasis zu positionieren. Wenn Prothetik bei den beiden Kiefern von Patienten erforderlich ist, ist es nur möglich, zwei Transferschablonen (eine für Ober- und die andere für Unterkiefer) zu verwenden und bei der Implementierung nacheinander einzusetzen, was zu einem doppelten Zeitaufwand führt.

Ferner besteht bei der Verwendung von konfektionierten Zähnen das Problem, dass wegen nicht individualisierter Zahnlänge der konfektionierten Zähne Störkontakte auf den Okklusionsflächen auftreten, welche Störkontakte zwar im virtuellen Artikulator in der Software dargestellt und aufgezeigt, aber nicht bei der Fertigstellung der Prothese berücksichtigt werden können. Eine praktikable Lösung dieses Problems, ohne den gefertigten Zahnersatz in einen Artikulator zu übertragen, ist bisher nicht bekannt.

Wenn die Klebeverbindung der künstlichen Zähne an der Prothesenbasis nicht fest genug ist, besteht außerdem bei der Kaubewegung oder anderen Zahnbewegungen im Mund die Gefahr, dass die Zähne nicht stabil genug in der Kavität der Prothesenbasis gehalten sind und eventuell sogar aus der Prothesenbasis herausfallen.

Daher liegt der Erfindung die Aufgabe zugrunde, eine Dental-Transferschablonenanordnung gemäß dem Oberbegriff von Anspruch 1 zu schaffen, die den Zeitaufwand bei der Prothesenherstellung für beide Kiefer verringert, bei Verwendung von konfektionierten Zähnen Störkontakte auf den Okklusionsflächen vermeidet und eine sichere Klebung von Zahnersatz an der Prothesenbasis gewährleisten kann.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, dass in der Okklusalebene eine Biss-Sperre der Transferschablone, die einen Zahnreihenschluss verhindert, vorgesehen ist, die Dicke welcher Sperre insbesondere etwa 2 bis 8 mm beträgt, und dass die Zahn-Ausnehmungen von der Biss-Sperre ausgehend in einander entgegengesetzten Richtungen, die Oberkiefer und Unterkiefer entsprechen, offen sind.

Diese Biss-Sperre unterteilt die erfindungsgemäße Transferschablone in je ein Oberkieferteil und ein Unterkieferteil, welche Schablone gleichzeitig für beide Kiefer das Transferieren der Zähne, die Positionierung der Zähne in die Kavität der Prothesenbasis ermöglicht. Erfindungsgemäß ist es weiter vorgesehen, dass die Transferschablone nur entweder für Ober- oder Unterkiefer verwendet werden kann.

Ferner steift überraschend erfindungsgemäß diese Biss-Sperre die Transferschablone aus, wenn die Transferschablone gleichzeitig für die Zähne an den Ober- und Unterkiefer verwendet wird.

Nachdem konfektionierte Zähne in der Ausnehmungen der Transferschablone gehalten sind, ist außerdem die Transferschablone für die Zähne an beiden Kiefern zum basalen Enkürzen der Zähne verwendbar.

Darüber hinaus ist erfindungsgemäß eine sichere Klebung jedes Zahnes in der Prothesenbasis gewährleistet. Die Klebefläche jedes Zahnes in der Prothesenbasis weist in vorteilhafter Ausgestaltung einen vorgegebenen minimalen Schwellenwert, mindestens 10 mm², bevorzugt mindestens 18 mm², und besonders bevorzugt mindestens 25 mm², auf, welcher Schwellenwert insbesondere in der CAD-Software der CAD/CAM-Vorrichtung zur Herstellung der Prothesenbasis festgelegt ist. Dieser Wert ist auch - je nach Klebstoff - steigerbar, beispielhaft auf mindestens 39 mm².

In vorteilhafter Ausgestaltung ist es vorgesehen, dass in Größe und Lage die Ausnehmungen der Transferschablone der Aufstellung der Oberkiefer- und Unterkiefer-Zahnreihen entspricht. In vorteilhafter Ausgestaltung ist es vorgesehen, dass die Transferschablone in ihrer Schablonenform mit Ausnehmungen für Zähne per Rapid-Prototyping oder per Fräsen erzeugt ist. Die Innenflächen der Ausnehmungen in der Transferschablone, die den okklusalen/inzisalen Außenflächen der Zähne entsprechen, sind basierend auf einer Zahnbibliothek erzeugt, welche Außenflächen in der CAD/CAM-Vorrichtung entsprechend insbesondere vorgefertigten Zähnen abgespeichert sind.

In vorteilhafter Ausgestaltung ist es vorgesehen, dass die Transferschablone aus nicht steifen und im Vergleich mit den Zähnen nachgiebigen Material, insbesondere aus Kunststoff, herstellt ist, so dass die Zähne in der Ausnehmungen der Transferschablone mit Hilfe einer begrenzten Verformungskraft an den Innenflächen der Ausnehmungen der Transferschablone gehalten und in die Prothesenbasis transferiert werden können.

In vorteilhafter Ausgestaltung ist es vorgesehen, dass die Transferschablone aus geeigneten Materialien, insbesondere aus Metall oder Kunststoff, bevorzugt zur besseren Kontrolle der positionierten Zähne aus transparentem Kunststoff, hergestellt ist.

In vorteilhafter Ausgestaltung ist es vorgesehen, dass bei der Berechnung der Flächen der Ausdehnungen in der Transferschablone ein herstellungsbedingter Schrumpfungsfaktor der konfektionierten Zähne von etwa ±100 µm berücksichtigt wird, welcher Faktor dem Schrumpfungsgrad der konfektionierten Zähne wegen thermischer Ausdehnung entspricht.

In vorteilhafter Ausgestaltung ist es vorgesehen, dass die Höhenlage der Zähne in der Transferschablone basierend auf CAD- und Scandaten und damit indirekt auf Patientendaten festgelegt ist.

Bei Verwendung von konfektionierten Zähnen ragen wegen der nicht individualisierten Zahnlänge einige Zähne über die basale Seite der Prothesenbasis hinaus,. Erfindungsgemäß können die Prothesenbasis durchtretende Bereiche eines Zahns, dessen Höhe größer als die Höhenerstreckung von Transferschablone und Prothesenbasis im aufeinander gelegten Zustand ist, mit umgebenden Oberflächen im Wesentlichen bündig abschleifbar sind.

In vorteilhafter Ausgestaltung ist es vorgesehen, dass die Transferschablone durch die CAD/CAM-Vorrichtung erzeugte Zahnausnehmungen aufweist, die so eine Position des Zahns im Raum festlegen, wobei jeder Zahn insbesondere 5% bis 90% seiner Längserstreckung von der Transferschablone gehalten wird.

In vorteilhafter Ausgestaltung ist es vorgesehen, dass die Transferschablone und die Prothesenbasis im zusammengesetzten Zustand einen die Zähne umgebenden Freiraum belassen, dessen Höhe insbesondere teilweise 0% bis 50%, bevorzugt etwa 20% der Höhe der Zähne beträgt.

In vorteilhafter Ausgestaltung ist es vorgesehen, dass die Transferschablone und die Prothesenbasis im aufeinandergesetzten Zustand über eine Mehrzahl, insbesondere drei Stützstellen, aneinander abgestützt und in eine definierte Relativposition bei eingesetzten Zähnen gebracht sind.

In vorteilhafter Ausgestaltung ist es vorgesehen, dass die Transferschablone zusammen mit der Prothesenbasis eingesetzte Zähne in allen drei Raumrichtungen fest lagert, und in diesem Zustand sind erfindungsgemäß etwaiger über die basale Seite der Prothesenbasis hinausragende Zahnbereich ohne zusätzliche und separate Stützkontakte für die einzelnen Zähne abschleif- oder abfräsbar.

In vorteilhafter Ausgestaltung ist es vorgesehen, dass der Schwellenwert der Klebefläche der Zähne an der Prothesenbasis unterschiedlich für unterschiedliche Zahntypen - Schneidezähne, Prämolaren und Molaren - ist und zur entsprechenden Anpassung eine Vergrößerung der Klebefläche durch die CAD-Software der CAD/CAM-Vorrichtung angefordert wird.

In vorteilhafter Ausgestaltung ist es vorgesehen, dass der Schwellenwert der Klebefläche der Zähne an der Prothesenbasis unterschiedlich für unterschiedliche Zähne, insbesondere für konfektionierte Zähne mit unterschiedlichen Zahnlängen ist, und zur entsprechenden Anpassung eine Vergrößerung der Klebefläche durch die CAD-Software der CAD/CAM-Vorrichtung angefordert wird.

In vorteilhafter Ausgestaltung ist es vorgesehen, dass zur Vergrößerung der Klebefläche der Zähne an der Prothesenbasis sich der zervikale Bereich der Ausnehmungen der Prothesenbasis in die inzisale Richtung mittels der CAD/CAM-Vorrichtung erstrecken kann.

In vorteilhafter Ausgestaltung ist es vorgesehen, dass die CAD/CAM-Vorrichtung bei der Festlegung der Höhenlage der Zähne in den Ausnehmungen in der Prothesenbasis dort einen Klebespalt erfindungsgemäß mit einer vorgegebenen Dicke berücksichtigt, insbesondere teilweise 0 µm bis 500 µm, bevorzugt 50 µm bis 250 µm, dass also die Außenform um diesen Spalt größer als der zervikale Bereich der Zähne ausgelegt und so die Höhenlage jedes Zahns exakt festgelegt ist.

In vorteilhafter Ausgestaltung ist es vorgesehen, dass auf der vestibulären Seite an jedem Zahn Fenster-Aussparungen angeordnet sind, um die korrekte Höhenlage der Zähne in den Innenflächen der Ausnehmungen in der Transferschablone zu kontrollieren.

In vorteilhafter Ausgestaltung ist es vorgesehen, dass durch die Transferschablone die relative dreidimensionale Lage von Oberkiefer- und Unterkieferprothese fixiert ist, so dass die fertigen Prothesen in einen um die vertikale Achse verschiebbaren Artikulator/Okkludator gebracht werden können, um eine okklusale Korrektur an den Prothesenzähnen vorzunehmen.

Ein solcher Artikulator vermag die Bewegungsabläufe des menschlichen Kiefers zu simulieren. Das Kiefergelenk als solches bewegt sich bei einer Absenkung der Bisslage oder einer Erhöhung derselben nach dem Prinzip einer Türangel, d.h., eine Anhebung im anterioren Bereich um 3 mm entspricht derjenigen im Mastikationsbereich zirka 1/3 bis 1 mm.

Die Gelenksgeometrie unterscheidet sich je nach Artikulatortyp. Um diese Vielfalt an Gelenksgeometrien zu ermöglichen, wird die vertikale Absenkung für alle Artikulatoren in gleicher Weise vorgenommen. Der Adapter im Artikulator ist für die Gelenkgeometrie gleich. Dadurch bleibt die Gelenksgeometrie nicht angetastet.

Durch diesen Adapter im Artikulator werden die Zahnreihen der oberen und unteren Prothese in Kontakt, also in Okklusion gebracht. Durch diese Möglichkeit kann die zentrische Lage der Zahnreihen des Ober- und Unterkiefers überprüft, gegebenenfalls schleiftechnisch nachjustiert werden. Im Fall von funktionellen Retuschen kann die dynamische Justierung und das selektive Einschleifen spezifisch im Artikulator erfolgen. Dazu werden dann je nach Artikulatortyp zumindest die Gelenksneigung und der Benettwinkel als Mindestanforderung eingestellt.

In vorteilhafter Ausgestaltung ist es vorgesehen, dass die Transferschablone wiederverwendbar ist.

In vorteilhafter Ausgestaltung ist es vorgesehen, dass insbesondere durch die CAD/CAM-Vorrichtung ein Abstand zwischen Zahnpositionen für Oberkiefer- und Unterkieferprothese festlegbar ist, der mit der vertikalen Verschiebeachse des Artikulators/Okkludators korreliert ist.

Weitere Vorteile, Einzelheiten und Merkmale ergeben sich aus der nachstehenden Beschreibung eines Ausführungsbeispiels anhang der Zeichnung.

Es zeigen:
- Fig. 1: eine schematisch dargestellte erfindungsgemäße Ausführungsform der Dental-Transferschablonenanordnung in Vorderansicht;
- Fig. 2: die Ausführungsform der Dental-Transferschablonenanordnung gemäß Fig. 1 in Draufsicht (ohne Prothesenbasis dargestellt);
- Fig. 3: die Ausführungsform der Dental-Transferschablonenanordnung gemäß Fig. 1 in Seitenansicht;
- Fig. 4: eine weitere Ausführungsform der Dental-Transferschablonenanordung (ohne Transferschablone dagestellt);
- Fig. 5: die Ausführungsform gemäß Fig. 4 in Seitenansicht;
- Fig. 6: die Ausführungsform gemäß Fig. 4 in Seitenansicht;
- Fig. 7: die Haltevorrichtung und eine Ausführungsform der Dental-Transferschablonenanordnung;
- Fig. 8: der Distanzhalter und dessen Anordnung in der Kavität der Prothesenbasis; und
- Fig. 9: ein schematisch dargestellter Artikulator mit Prothesen.

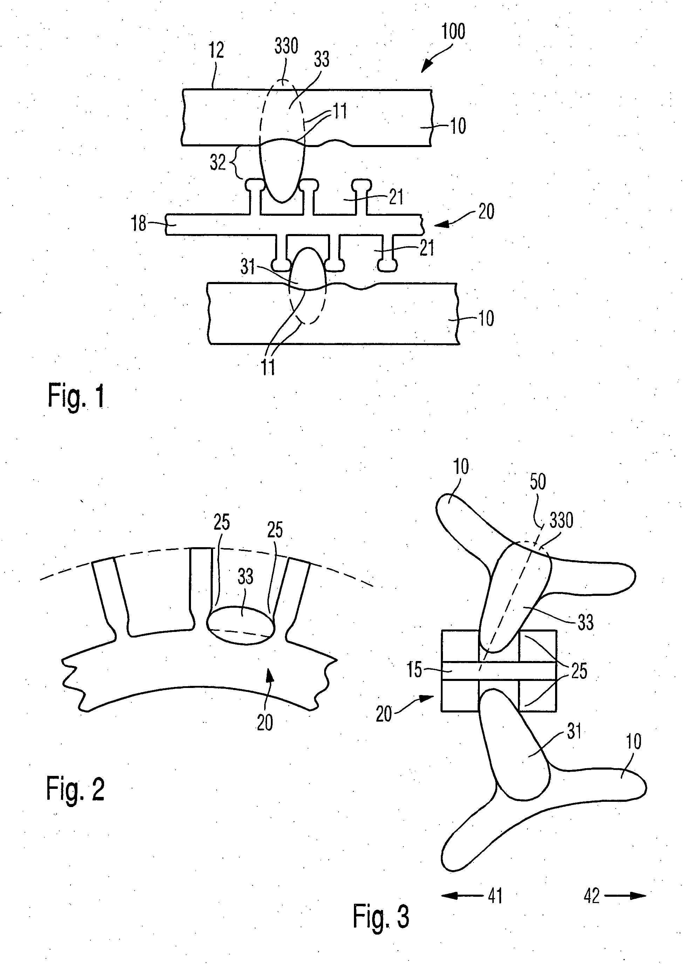

Die in Fig. 1 dargestellte Dental-Transferschablonenanordnung 100 weist eine Transferschablone 20 und zwei Prothesenbasen 10 je für Ober- und Unterkiefer auf, wobei die Transferschablone und die Prothesenbasen eine Vielzahl der Ausnehmungen 21 und 11 für Schneidezähne aufweisen, von denen die Schneidezähne 31 und 33 in Fig. 1 dargestellt sind. In die Transferschablonen-Ausnehmungen 21 passen inzisale und/oder okklusale Bereiche und in die Prothesenbasis-Ausnehmungen 11 passen zervikale Bereiche der Zähne 31 und 33. Die Schneidezähne 31 und 33 sind je in die Prothesenbasis-Ausnehmungen 11 einzukleben.

Die Transferschablone 20 weist erfindungsgemäß in der Okklusalebene eine Biss-Sperre 18 auf, die einen Zahnreihenschluss verhindert und deren Dicke insbesondere etwa 1,5 bis 8 mm beträgt.

Diese Biss-Sperre 18 unterteilt die Transferschablone 20 in je ein Oberkieferteil und ein Unterkieferteil und steift die Transferschablone 20 aus, wenn die Transferschablone 20 gleichzeitig für die Zähne an den Ober- und Unterkiefer, wie in Fig. 1 dargestellt, verwendet ist.

Die Zahn-Ausnehmungen 21 sind von der Biss-Sperre 18 ausgehend in einander entgegengesetzten Richtungen, die Oberkiefer und Unterkiefer entsprechen, offen.

Die Zähne 31 und 33 werden mittels der Transferschablone 20 in beliebiger geeigneter Weise, in die Kavitäten/Ausnehmungen 11 der Prothesenbasen 10 eingebracht, indem die Zähne 31 und 33 beispielsweise mit Wachs, Harz oder einem anderen Klebstoff in den Innenflächen der Ausnehmungen 21 der Transferschablone 20 vorläufig gesichert werden oder mit Hilfe der Verformungskraft von den Innenflächen der Ausnehmungen 21 der Transferschablone die Zähne 31 und 33 in der Transferschablone 20 gehalten sind. Bevorzugt ist die Transferschablone 20 zur besseren Kontrolle der positionierten Zähne aus transparentem Kunststoff hergestellt.

Anschließend werden die Zähne 31 und 33 je mit Hilfe der Transferschablone 20 in die Prothesenbasen 10 positioniert und eingeklebt.

An der vestibulären Seite der Zähne 31 und 33 sind erfindungsgemäß Fenster-Aussparungen der Transferschablone 20 angeordnet, um die korrekte Höhenlage der Zähne 31 und 33 in den Innenflächen der Ausnehmungen 21 in der Transferschablone 20 zu kontrollieren.

Der die basale Seite 12 der Prothesenbasis 10 durchtretende Bereich 330 des Zahnes 33 wird im Wesentlichen bündig entfernt, insbesondere beschliffen oder abgefräst.

In der Ausführungsform gemäß Fig. 1 legen die Ausnehmungen 21 der Transferschablone 20 die Position der Zähne 31 und 33 im Raum so fest, dass jeder Zahn zu etwa 30% von der Transferschablone 20 gehalten ist. In einer weiteren Ausführungsform beträgt dieser Wert 5% bis 90%.

Die in Fig. 1 dargestellte Transferschablone 20 wird mit den Prothesenbasen 10 dergestalt zusammengeführt, dass die die Zähne 31 und 33 umgebende Transferschablone 20 keinen physikalischen Kontakt mit den Prothesenbasen 10 hat. Es ist ein die Zähne 31 und 33 umgebender Freiraum 32, dessen Höhe insbesondere etwa 20% der Zahnlänge beträgt, vorgesehen.

In einer weiteren Ausführungsform (nicht dargestellt) sind die Transferschablone und die Prothesenbasen im aufeinandergesetzten Zustand über eine Mehrzahl, insbesondere drei Stützstellen, aneinander abgestützt und in eine definierte Relativposition bei eingesetzten Zähnen gebracht.

In Fig. 2 ist gemäß Fig. 1 eine erfindungsgemäße Transferschablone 20 mit dem gehaltenen Zahn 33 in Draufsicht dargestellt. Aus der Verbindung von Fig. 2 und 3 ist es ersichtlich, dass der Zahn 33 mindestens drei Stützstellen 25 an der Transferschablone 20 hat, damit der Zahn 33 in den Ausnehmungen 21 der Transferschablone 20 gesichert werden kann.

In einer bevorzugten Ausführungsform werden die Zähne 31 und 33 mit Hilfe der Verformungskraft von den Stützstellen 25 der Innenflächen der Ausnehmungen 21 der Transferschablone 20 in allen drei Raumrichtungen fest gelagert.

In Fig. 3 ist gemäß Fig. 1 eine erfindungsgemäße Dental-Transferschablonenanordnung 100 in Seitenansicht dargestellt. Die Pfeile 41 und 42 weisen in die labiale und die linguale Richtung. In der in Fig. 3 dargestellten Ausführungsform beträgt ein Winkel zwischen der vertikalen Achse und der Wurzelachse 50 etwa 10° bis 35°.

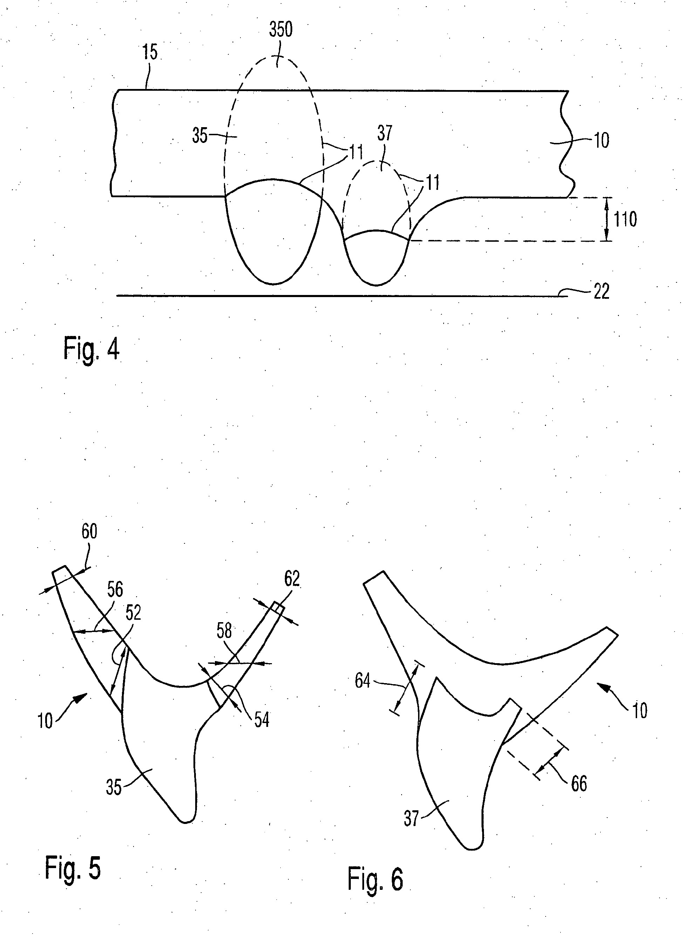

Eine weitere erfindungsgemäße Ausführungsform ist in Fig. 4 dargestellt. Es ist ersichtlich, dass die Höhe des dortigen (konfektionierten) Zahnes 35 vergleichweise zu groß für die Prothesenbasis 10 ist. Wenn der Zahn 35 ohne weitere Bearbeitung in die Kavität der Prothesenbasis 10 eingeklebt wird, entsteht dann ein starker Störkontakt in der Okklusalebene. Darüber hinaus besteht die Gefahr, dass bei der Mastikationsbewegung der Zahn 35 instabil in der Kavität der Prothesenbasis 10 gehalten ist und eventuell sogar aus der Prothesenbasis 10 herausfällt, und zwar wegen der auf vertikaler Ebene proportional mit den Flächenausdehnungen des Zahnes 35 zu geringen Klebefläche des Zahnes 35 an der Prothesenbasis 10. Gemäß der Hebelwirkung ist der der Klebekraft entsprechende Lastarm etwa kürzer als während der Mastikationsbewegung der der Reibungskraft entsprechende Kraftarm.

Erfindungsgemäß ist es günstig, dass sich der Zahn 35 in der Prothesenbasis 10 mit Hilfe der Transferschablone 20 (nicht dargestellt) labial nach unten bis zu der Okkusalebene 22 zur Vermeidung des Störkontaktes sichern lässt, wie es in Fig. 4 dargestellt. Wegen der größeren Länge des Zahnes 35 durchtritt der Zahn 35 die Basalfläche 15 der Prothesenbasis 10. Hierdurch wird die Klebefläche vergrößert. Der durchtretende Bereich 350 wird dann erfindungsgemäß beschliffen. Konsequent ist die Lastarm-Kraftarm-Verhältnis verbessert und daher eine sichere Klebung gewährleistet.

Gemäß Fig. 4 ist ferner ein Zahn 37 vorgesehen, dessen Höhe vergleichweise zu klein für die Prathesenbasis 10 ist. Falls der Zahn 37 in sich bekannter Weise in die Kavität der Prothesenbasis 10 eingeklebt wird, ist auch wegen der Hebelwirkung beim Kauen, wie beim oben genannten Fall des Zahnes 35, die Klebefläche zu gering, um eine sichere Klebung zu gewährleisten.

Erfindungsgemäß ist es besonders günstig, dass die CAD-Software zur Herstellung der Prothesenbasis vor der Gefahr warnt, dass keine ausreichende Klebefläche zur Verfügung steht.

Erfindungsgemäß ist es weiter günstig, dass die Kavität 11 der Prothesenbasis 10 unter der Steuerung durch die CAD/CAM-Vorrichtung so umgebildet wird, dass sich der zervikale Bereich der Kavität 11 in die inzisale Richtung erstreckt. Die Erstreckungsausdehnung wird in Fig. 4 als Höhe 110 bezeichnet. Die in Fig. 4 dargestellte verlängerte Kavität 11 der Prothesenbasis 10 ermöglicht erfindungsgemäß eine zusätzliche Klebefläche des Zahnes 37 an der Prothesenbasis 10. Hierdurch wird eine sichere Klebeverbindung gewährleistet.

In Fig. 5 und Fig. 6 sind Zähne 35 und 37 in Seitenansicht dargestellt.

Die Dicke des Kragenbereiches der Prothesenbasis 10 beim Zervikalrand der Zähne 35 und 37 labial 56 (bzw. bukkal) und palatinal 58 (bzw. lingual) muss mehr als 2 mm sein.

Die Dicke am minimal höchsten Punkt (2 mm) des Kragenbereiches 60 und 62 muss mehr als 0,5 mm sein. Danach kann die Dicke auslaufend sein.

Erfindungsgemäß ist es günstig, dass die Eckwerte bezüglich der Minimalanforderungen der Klebung in der CAD-Software einstellbar sind, wobei hier zwei Fälle beispielhaft erläutert werden:
Fall 1 - Klebung ohne oder teilweise mit basalem Kontakt zur Prothesenbasis 10 entsprechend dem Zahn 35 gemäß Fig. 5:
   minimale Höhe des Kragenbereiches 52 und 54 der Prothesenbasis 10 muss mehr als 2 mm sein, über 360° rundum;
Fall 2 - Klebung mit vollem basalen Kontakt zur Prothesenbasis 10 entsprechend dem Zahn 37 gemäß Fig. 6:
   minimale Höhe des Kragenbereiches 64 und 66 der Prothesenbasis 10 muss mehr als 2 mm sein, über 180° rundum, bevorzugt labial und palatinal (bzw. bukkal und lingual) einschließlich, und die minimale Höhe des Kragenbereiches der Prothesenbasis 10 für den restlichen 180° muss mehr als 1 mm sein.

Im Fall 1 sollte optimale Kragenhöhe mehr als 3 mm sein, wobei ein Wulst oder eine Ummantelung vorgesehen ist, die eine Verlängerung der Kavität 11 der Prothesenbasis 10 in Fig. 4 dargestellt, wobei sich mindestens 50% der Ummantelung bevorzugt im lingualen bzw. palatinalen Bereich befindet.

Erfindungsgemäß ist es weiter günstig, dass basierend auf den obigen Eckwerten die minimale Klebefläche, die eine sichere Klebung des Zahnes an der Prothesenbasis gewährleistet, ausgerechnet werden kann und insbesondere in der CAD-Software zur Herstellung der Prothesenbasis 10 festgelegt ist.

Wird die momentan kleinste Zahnform A3 der Anmelderin ohne Basalmulde herangezogen, beträgt der Umfang des Zahnes A3 gemessen in der Kragenhöhenmitte 14,6 mm und die Bodenfläche des Zahnes A3 16,97 mm² (der nachfolgende Algorithmus ist bei alternativen Zahnformen mit anderen Größen oder von anderen Firmen auch anwenbar).

Im oben genannten Fall 1, nämlich Klebung ohne oder teilweise mit basalem Kontakt zur Prothesenbasis, ergibt sich eine minimale Klebefläche von 14,6 mm × 2 mm = 29,2 mm²

Im oben genannten Fall 2, nämlich Klebung mit vollem basalen Kontakt zur Prothesenbasis, soll die gesamte Klebefläche aus der Kombination der Kragenfläche und Basalfläche ausgerechnet werden, wobei sich die minimale Klebefläche so ergibt:
- Kragenfläche über 180° mit 2 mm Höhe = 14,6 mm / 2 × 2 mm = 14,6 mm²;
- Kragenfläche über 180° mit 1 mm Höhe = 14,6 mm / 2 × 1 mm = 7,3 mm²;
- Basalfläche mit vollem basalen Kontakt zur Prothesenbasis =16,97 mm² ;
- minimale Klebefläche = 14,6 mm² + 7,3 mm² + 16,97 mm² = 38,87 mm².

Gemäß dem Moffit-Verbundtest (Aushebeltest) ergibt sich für die Zähne mit den oben genannten minimalen Klebeflächen eine Bruchlast um 500N. Hierbei ist es günstig, unmittelbar vor der Klebung ein Aufrauhen vorzunehmen, bevorzugt mittels Sandstrahlen mit Aluminiumoxid-Partikeln mit einer Korngröße von 100 µm und einem Druck von 1 bis 2 bar. Ferner kann es vorteilhaft sein, die Klebeflächen vorzubenetzen, z.B. mit ProBase cold Monomer der vorliegenden Anmelderin, insbesondere, wenn Komposit-Zähne verwendet werden, bei denen die Schneideschicht bios in den zervikalen Bereich hineinreicht.

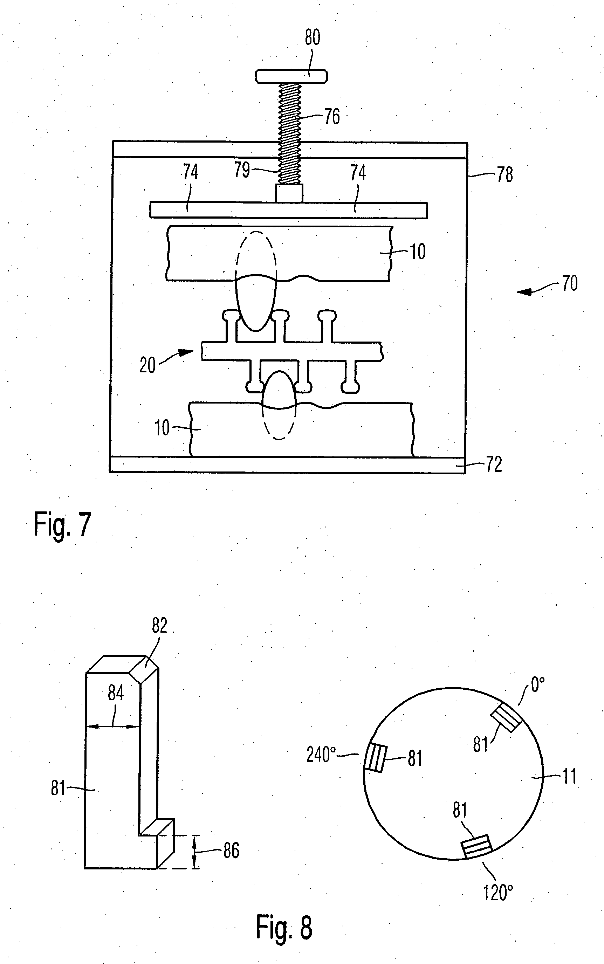

In Fig. 7 ist eine Haltevorrichtung 70 für die Unterkiefer- und/oder Oberkieferprothese dargestellt, welche Vorrichtung die Fixierung der Zähne an den Prothesenbasen 10 oder das Aushärten des Klebers unterstützen/sichern kann.

Die Haltevorrichtung 70 weist ein Substrat 72, einen Rahmen 78, mindestens drei Balken 74 (nur zwei davon in Fig. 7 dargestellt), einen Stempel 79 mit Gewinde 76 und einen Drehgriff 80 auf.

Die Prothesenbasen 10 zusammen mit den Zähnen in den Kavitäten dieser und mit der Transferschablone 20 können auf das Substrat 72 der Haltevorrichtung 70 aufgebracht werden und dort fixiert werden.

Die Balken 74 sind durch Drehen des Drehgriffs 80 in der vertikalen Richtung über den Stempel 79 heb- und senkbar. Wenn gemäß Fig. 7 die Balken 74 nach unten bis zur Oberseite der oberen Prothesenbasis 10 und noch weiter abgesenkt werden, wird ein Druck von den Balken 74 nach unten über diese Prothesenbasis 10 auf die Zähne, die Transferschablone 20 und die untere Prothesenbasis 10 ausgeübt.

Die beiden Prothesenbasen 10 werden dann von den Balken 74 und dem Substrat 72 der Haltevorrichtung 70 eingespannt und so eine Fixierung der Zähne an den Prothesenbasen 10 und ein Aushärten des Klebers unterstützt. Eine mittige Anordnung des Stempels 79 ergibt eine gleichmäßige Haltekraft.

Erfindungsgemäß ist es weiter günstig, dass in der CAD-Software der Klebespalt zwischen Zähnen und Prothesenbasis mit 100 µm definiert ist. Ist bei der Positionierung und der Klebung die Zähne in die Kavitäten der Prothesenbasis 10 genauer zu zentrieren und es ist erwünscht, den Klebespalt von 100 µm um die Zähne herum zu sichern, werden erfindungsgemäß günstig mindestens drei Distanzhalter 81, wie in Fig. 8 dargestellt, verwendet. Ohne Distanzhalter betrug der Klebespalt zwischen 78 und 160µm, mit diesen war die Breitenschwankung nicht meßbar. Die Zahn-Ausnehmung 11 der Prothesenbasis 10 ist gemäß Fig. 8 in Draufsicht dargestellt. Die drei Distanzhalter 81 sind an der Innenfläche der etwa kreisförmigen Zahn-Ausnehmung 11 120° voneinander entfernt nach innen vorragend senkrecht verlaufend zu der horizontalen Ebene angeordnet.

Das Oberteil 82 der Distanzhalter 81 ist zum leichten Einführen der Zähne in die Kavität 11 der Prothesenbasis 10 abgewinkelt. Der seitliche Abstand und der basale Abstand zwischen Zähnen und der Kavität der Prothesenbasis 10, welche Abstände als Klebespalt durch die Distanzhalter 81 ermöglicht werden, entsprechen jeweils der Länge 84 und der Höhe 86, welche je 100 µm betragen.

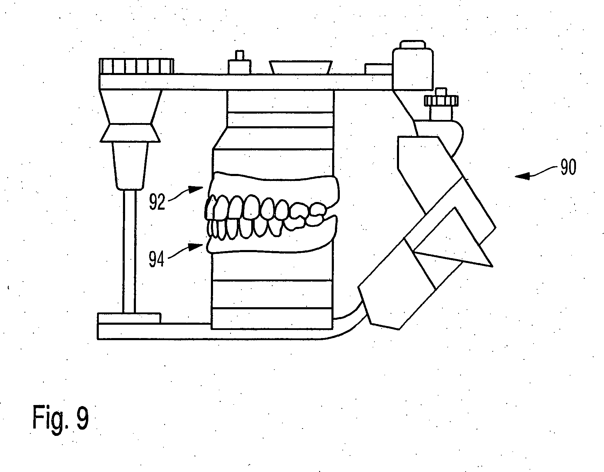

In Fig. 9 ist ein Artikulator 90 mit Prothesen schematisch dargestellt. Die fertigen Prothesen mit dem Oberkieferteil 92 und dem Unterkieferteil 94 werden in diesen um die vertikale Achse verschiebbaren Artikulator eingebracht, um eine okklusale Korrektur an den Prothesenzähnen vorzunehmen.

## Patentansprüche

1. Dental-Transferschablonenanordnung, mit einer Transferschablone und einer Prothesenbasis,
- wobei beide eine Vielzahl von Ausnehmungen für Prothesenzähne aufweisen, wobei in die Transferschablonen-Ausnehmungen inzisale und/oder okklusale Bereiche und in die Prothesenbasis-Ausnehmungen zervikale Bereiche von Prothesenzähnen passen,
- wobei die Prothesenzähne je in die Prothesenbasis-Ausnehmungen einklebbar sind, **dadurch gekennzeichnet,**
- **dass** in der Okklusalebene eine Biss-Sperre (18) der Transferschablone (20), die einen Zahnreihenschluss verhindert, vorgesehen ist, insbesondere die Dicke welcher Sperre etwa 2 bis 8 mm beträgt,
- **dass** die Biss-Sperre (18) die Transferschablone (20) in je ein Oberkieferteil und ein Unterkieferteil unterteilt, wobei die Transferschablone (20) für Oberkiefer und/oder Unterkiefer verwendet werden kann,
- **dass** die Zahn-Ausnehmungen (21) von der Biss-Sperre (18) ausgehend in einander entgegengesetzten Richtungen, die Oberkiefer und Unterkiefer entsprechen, offen sind,
- **dass** Prothesenzähne in den Ausnehmungen (21) der Transferschablone (20) haltbar sind,
- **dass** die Biss-Sperre (18) entlang der vestibulären Seite der Transferschablone (20) horizontal an den zu haltenden Prothesenzähnen (31, 33, 35, 37) und etwa in mittlerer Höhe der Transferschablone (20) angeordnet ist, und
- **dass** die Biss-Sperre (18) die Transferschablone (20) aussteift, wenn die Transferschablone (20) gleichzeitig für die Prothesenzähne (31, 33, 35, 37) an den Ober- und Unterkiefer verwendet ist.

2. Transferschablonenanordnung nach Anspruch 1, **dadurch gekennzeichnet, dass** die Klebefläche jedes Zahnes (31, 33, 35, 37) an der Prothesenbasis (10) einen Wert von mindestens 10 mm2, bevorzugt mindestens 18 mm2, und besonders bevorzugt mindestens 25 mm2, aufweist.

3. Transferschablonenanordnung nach einem der vorhergehenden Ansprüche, **dadurch gekennzeichnet, dass** zervikale Bereiche von Zähnen unter Verwendung der Transferschablone (20) in die Prothesenbasis-Zahnausnehmungen (11) je einbringbar und dort einklebbar sind.

4. Transferschablonenanordnung nach einem der vorhergehenden Ansprüche, **dadurch gekennzeichnet, dass** zur Vergrößerung der Klebefläche der zervikale Bereich der Ausnehmungen (11) der Prothesenbasis (10) in die inzisale/okklusale Richtung verlängerbar ist.

5. Transferschablonenanordnung nach einem der vorhergehenden Ansprüche, **dadurch gekennzeichnet, dass** eine Höhenlage der Zähne (31, 33, 35, 37) in der Transferschablone (20) festgelegt ist und dass die Basalseite der Prothesenbasis (10) durchtretende Bereiche eines Zahns (31, 33, 35, 37), dessen Höhe größer ist als die Höhenerstreckung der Transferschablone (20) und der Prothesenbasis (10) im aufeinander gelegten Zustand dieser, im Wesentlichen bündig zur Basalseite der Prothesenbasis abschleifbar ist.

6. Transferschablonenanordnung nach einem der vorhergehenden Ansprüche, **dadurch gekennzeichnet, dass** die Transferschablone (20) Zahn-Ausnehmungen (21) aufweist, die so eine Position eines in die Zahn-Ausnehmungen eingesetzten Prothesenzahns (31, 33) im Raum festlegen, wobei jeder Zahn (31, 33) mit einem Anteil seiner Längserstreckung von der Transferschablone (20) gehalten ist.

7. Transferschablonenanordnung nach einem der vorhergehenden Ansprüche, **dadurch gekennzeichnet, dass** die Transferschablone (20) und die Prothesenbasis (10) im zusammengesetzten Zustand einen Freiraum (32) belassen, von dem die Zähne (31, 33) im in die Zahn-Ausnehmungen eingesetzten Zustand umgeben sind und dessen Höhe einem Anteil der Höhe der Zähne (31, 33) entspricht.

8. Transferschablonenanordnung nach einem der vorhergehenden Ansprüche, **dadurch gekennzeichnet, dass** die Transferschablone (20) und die Prothesenbasis (10) im aufeinandergesetzten Zustand über eine Mehrzahl, insbesondere drei, Stützstellen, aneinander abgestützt und in eine definierte Relativposition bei eingesetzten Zähnen (31, 33) gebracht sind.

9. Transferschablonenanordnung nach einem der vorhergehenden Ansprüche, **dadurch gekennzeichnet, dass** auf der vestibulären Seite an jedem Zahn Fenster-Aussparungen der Transferschablone angeordnet sind, so dass die korrekte Höhenlage der Zähne in den Innenflächen der Ausnehmungen (21) in der Transferschablone (20) kontrollierbar ist.

10. Verfahren zur Herstellung einer Dental-Transferschablonenanordnung nach einem der Ansprüche 1 bis 9, **dadurch gekennzeichnet, dass** die Transferschablone und die Prothesenbasis mit CAD/CAM-Vorrichtungen hergestellt werden.

11. Verfahren nach Anspruch 10, **dadurch gekennzeichnet, dass** basierend auf einer Zahnbibliothek ein vorgegebener minimaler Schwellenwert einer Klebefläche jedes Prothesenzahns an der Prothesenbasis in der CAD-Software der CAD/CAM-Vorrichtung zur Herstellung der Prothesenbasis festgelegt wird, wobei der Schwellenwert insbesondere mindestens 10 mm2, bevorzugt mindestens 18 mm2, und besonders bevorzugt mindestens 25 mm2 beträgt.

12. Verfahren nach Anspruch 10 oder 11, **dadurch gekennzeichnet, dass** die CAD/ CAM-Vorrichtung die Transferschablone (20) basierend auf Scan- und CAD-Daten erzeugt, welche beiden Daten jeweils aus einem dreidimensionalen Scan einer Mundsituation eines Patienten und aus einer Schablonenbibliothek in der CAD-Software gewonnen sind und die Prothesenbasis (10) basierend auf insbesondere den gleichen Scandaten und den CAD-Daten aus einer Prothesenbasisbibliothek in der CAD-Software erzeugt.

13. Verfahren nach einem der Ansprüche 10 bis 12, **dadurch gekennzeichnet, dass** die Transferschablone (20) mit Ausnehmungen (21) für Zähne (31, 33, 35, 37), insbesondere per Rapid-Prototyping oder per Fräsen, erzeugt wird, und dass die Innenflächen der Ausnehmungen (21) in der Transferschablone (20), die den okklusalen/inzisalen Außenflächen der Zähne (31, 33, 35, 37) entsprechen, basierend auf einer Zahnbibliothek erzeugt werden, welche Außenflächen in der CAD/CAM-Vorrichtung entsprechend insbesondere vorgefertigten Zähnen abgespeichert sind.

14. Verfahren nach einem der Ansprüche 11 bis 13, **dadurch gekennzeichnet, dass** der Schwellenwert unterschiedlich für unterschiedliche Zahntypen ist - Schneidezähne, Eckzähne, Prämolaren und Molaren - und zur entsprechenden Anpassung der Prothesenbasis (10) eine Vergrößerung der Klebefläche basierend auf der Zahnbibliothek durch die CAD-Software der CAD/CAM-Vorrichtung angefordert wird.

15. Verfahren nach einem der Ansprüche 11 bis 14, **dadurch gekennzeichnet, dass** der Schwellenwert unterschiedlich für unterschiedliche Zähne ist, insbesondere für konfektionierte Zähne mit unterschiedlichen Zahnlängen, und zur entsprechenden Anpassung der Prothesenbasis (10) eine Vergrößerung der Klebefläche basierend auf der Zahnbibliothek durch die CAD-Software der CAD/CAM-Vorrichtung angefordert wird.

16. Verfahren nach einem der Ansprüche 10 bis 15, **dadurch gekennzeichnet, dass** bei der Berechnung der Flächen der Ausdehnungen in der Transferschablone (20) basierend auf der Zahnbibliothek ein herstellungsbedingter Schrumpfungswert der Zähne, insbesondere der konfektionierten Zähne, einbezogen wird, insbesondere welcher Wert etwa +/- 100 m beträgt.

17. Verfahren nach einem der Ansprüche 10 bis 16, **dadurch gekennzeichnet, dass** die CAD/CAM-Vorrichtung bei der Festlegung der Höhenlage der Zähne in den Ausnehmungen (11) der Prothesenbasis dort einen Klebespalt mit einer vorgegebenen Dicke, insbesondere teilweise 0 m bis 500 m, bevorzugt 50 m bis 250 m, berücksichtigt, dass also die Außenform dieses Spalts größer als der zervikale Bereich der Zähne ausgelegt und so die Höhenlage jedes Zahns exakt festgelegt wird.

18. Verfahren nach einem der Ansprüche 10 bis 17, **dadurch gekennzeichnet, dass** Prothesenzähne zum basalen Einkürzen dieser in den Ausnehmungen der Transferschablone gehalten werden.

## Claims

1. A dental positioning device assembly, comprising a positioning device and a denture base
both comprising a plurality of recesses for prosthetic teeth, wherein incisal and/or occlusal regions of prosthetic teeth fit into the positioning device recesses and cervical regions of prosthetic teeth fit into the denture base recesses,
- wherein the denture teeth are adapten to be glued into the denture base recesses,
**characterized in that**
- a bite block (18) of the positioning device (20), which prevents tooth row closure, is provided in the occlusal plane, the thickness of which block especially being approximately 2 to 8 mm,
- **in that** the bite block (18) divides the positioning device (20) into an upper jaw part and a lower jaw part, wherein the positioning device (20) may be used both for the upper jaw and/or lower jaw,
- **in that** the tooth recesses (21) extending from the bite block (18) are open in opposite directions, which correspond to the upper and lower jaws,
- **in that** prosthetic teeth are retainable in the recesses (21) of the positioning device (20),
- **in that** the bite block (18) is arranged along the vestibular side of the positioning device (20) horizontally on the prosthetic teeth (31, 33, 35, 37) to be retained and approximately at the middle height of the positioning device (20), and
- **in that** the bite block (18) stiffens the positioning device (20) when the positioning device (20) is used simultaneously for the prosthetic teeth (31, 33, 35, 37) on the upper and lower jaw.

2. The positioning device assembly according to claim 1, **characterized in that** the bonding surface of each tooth (31, 33, 35, 37) to the denture base (10) is at least 10 mm2, preferably at least 18 mm2, and especially preferably at least 25 mm2.

3. The positioning device assembly according to one of the preceding claims, **characterized in that** cervical regions of teeth are each adapted to be introduced into the denture base tooth recesses (11) using the positioning device (20) and to be bonded thereto.

4. The positioning device assembly according to one of the preceding claims, **characterized in that** the cervical region of the recesses (11) of the denture base (10) may be extended in the incisal/occlusal direction to increase the bonding surface.

5. The positioning device assembly according to one of the preceding claims, **characterized in that** a height position of the teeth (31, 33, 35, 37) in the positioning device (20) is fixed and **in that** regions of a tooth (31, 33, 35, 37) passing through the basal side of denture base (10), which regions are higher than the height extension of the positioning device (20) and the denture base (10) in the state of being overlapped, can essentially be be ground off so that to be flush to the basal side of the prosthesis base.

6. The positioning device assembly according to one of the preceding claims, **characterized in that** the positioning device (20) comprises tooth recesses (21) defining a space position of a prosthesis tooth (31, 33) inserted into the tooth recesses, each tooth (31, 33) being retained by the positioning device (20) using a portion of its longitudinal extension.

7. The positioning device assembly according to one of the preceding claims, **characterised in that** the positioning device (20) and the denture base (10), in the assembled state, leave a free space (32), by which space the teeth (31, 33) are surrounded in the state of being inserted into the tooth recesses and the height of which free space corresponds to a portion of the height of the teeth (31, 33).

8. The positioning device assembly according to one of the preceding claims, **characterised in that** the positioning device (20) and the denture base (10), in the assembled state, are supported on each another via a plurality, especially three, support points and are brought into a defined relative position when the teeth (31, 33) are inserted.

9. The positioning device assembly according to one of the preceding claims, **characterised in that** window recesses of the positioning device are arranged on the vestibular side on each tooth, such that correct height positioning of the teeth in the inner surfaces of the recesses (21) in the positioning device (20) can be checked.

10. A method of manufacturing a dental positioning assembly according to any one of the claims 1 to 9, **characterized in that** the positioning device and the denture base are manufactured with CAD/CAM devices.

11. The method according to claim 10, **characterized in that**, based on a tooth library, a predetermined minimum threshold value of a bonding surface of each prosthesis tooth onto the denture base is determined in the CAD software of the CAD/CAM device for manufacturing the prosthesis base, wherein the threshold value is especially at least 10 mm2, preferably at least 18 mm2, and especially preferably at least 25 mm2.

12. The method according to claim 10 or 11, **characterized in that** the CAD/CAM device generates the positioning device (20) based on scan and CAD data, which two data are each obtained from a three-dimensional scan of a patient's mouth and from a positioning device library in the CAD software, and generates the denture base (10) especially based on the same scans and the CAD data from a denture base library in the CAD software.

13. The method according to one of the claims 10 to 12, **characterized in that** the positioning device (20) is produced with recesses (21) for teeth (31, 33, 35, 37), and especially are produced by rapid prototyping or milling, and that the inner surfaces of the recesses (21) are produced in the positioning device (20), which correspond to the occlusal/incisal outer surfaces of the teeth (31, 33, 35, 37), based on a tooth library, which outer surfaces are stored in the CAD/CAM device and especially corresponding to prefabricated teeth.

14. The method according to any one of the claims 11 to 13, **characterized in that** the threshold value is different for different types of teeth incisors, canines, premolars and molars and for appropriately adapting the denture base (10), enlargement of the bonding surface based on the tooth library is requested by the CAD software of the CAD/CAM device.

15. The method according to one of the claims 11 to 14, **characterized in that** the threshold value is different for different teeth, especially for prefabricated teeth having different teeth lengths, and for appropriately adapting the denture base (10), enlargement of the bonding surface based on the tooth library is requested by the CAD software of the CAD/CAM device.

16. The method according to one of the claims 10 to 15, **characterized in that** when calculating the areas of the extensions in the positioning device (20) based on the tooth library, a production-related shrinkage value of the teeth, especially of the prefabricated teeth, is included, which value especially is about +/-100 m.

17. The method according to one of the claims 10 to 16, **characterized in that** the CAD/CAM device, when determining the height position of the teeth in the recesses (11) of the denture base, incorporates a bonding gap of predetermined thickness, especially sometimes 0 m to 500 m, preferably 50 m to 250 m, **in that** the external shape of this gap is designed such that it is larger than the cervical region of the teeth, and the height position of each tooth will thus be exactly determined.

18. The method according to one of the claims 10 to 17, **characterised in that** prosthetic teeth are retained in the recesses of the positioning device for basal cutting thereof.

## Revendications

1. Arrangement d'un gabarit de transfert dentaire, avec un gabarit de transfert et une base de prothèse dentaire, où
- tous les deux présentent une pluralité d'évidements pour des dents prothétiques, et où des zones incisales et/ou occlusales des dents prothétiques s'adaptent dans les évidements du gabarit de transfert et des zones cervicales des dents prothétiques s'adaptent dans les évidements de la base prothétique,
- les dents prothétiques peuvent être collées respectivement dans les cavités de la base de la prothèse, **caractérisé en ce que**,
- une barrière d'occlusion (18) du gabarit de transfert (20) pour empêcher une fermeture des rangées de dents est prévue dans le plan occlusal, où l'épaisseur de cette barrière est en particulier environ 2 à 8 mm,
- la barrière d'occlusion (18) divise le gabarit de transfert (20) en une partie de mâchoire supérieure et une partie de mâchoire inférieure respectivement, où le gabarit de transfert (20) peut être utilisé pour la mâchoire supérieure et/ou la mâchoire inférieure,
- les évidements des dents (21), en partant de la barrière d'occlusion (18), sont ouverts dans des directions mutuellement opposées correspondant à la mâchoire supérieure et à la mâchoire inférieure, - que les dents prothétiques peuvent être maintenues dans les évidements (21) du gabarit de transfert (20),
- la barrière d'occlusion (18) est disposé le long du côté vestibulaire du gabarit de transfert (20) horizontalement par rapport aux dents prothétiques (31, 33, 35, 37) à maintenir et approximativement à la hauteur médiane du gabarit de transfert (20), et
- la barrière d'occlusion (18) raidit le gabarit de transfert (20) lorsque le gabarit de transfert (20) est utilisé simultanément pour les dents prothétiques (31, 33, 35, 37) sur les mâchoires supérieure et inférieure.

2. Arrangement de gabarit de transfert selon la revendication 1, **caractérisé en ce que** la surface adhésive de chaque dent (31, 33, 35, 37) sur la base de la prothèse dentaire (10) a une valeur minimale de 10 mm2, de préférence d'au moins 18 mm2, et de manière particulièrement préférée d'au moins 25 mm2.

3. Arrangement de gabarit de transfert selon l'une des revendications précédentes, **caractérisé en ce que** les zones cervicales des dents peuvent être introduites chacune dans les évidements (11) des dents de base de la prothèse en utilisant le gabarit de transfert (20) et peuvent y être collées.

4. Arrangement de gabarit de transfert selon l'une des revendications précédentes, **caractérisé en ce que** la zone cervicale des évidements (11) de la base de la prothèse (10) peut être étendue dans la direction incisale/occlusale pour augmenter la surface adhésive.

5. Arrangement de gabarit de transfert selon l'une des revendications précédentes, **caractérisé en ce qu'**une position en hauteur des dents (31, 33, 35, 37) est précisée dans le gabarit de transfert (20) et **en ce que** les zones d'une dent (31, 33, 35, 37) traversant la face basale de la base de la prothèse (10), dont la hauteur est supérieure à l'extension en hauteur du gabarit de transfert (20) et la base de la prothèse (10) à l'état superposé de celle-ci, peuvent être meulée sensiblement en affleurement avec la face basale de la base de la prothèse.

6. Arrangement de gabarit de transfert selon l'une quelconque des revendications précédentes, **caractérisé en ce que** le gabarit de transfert (20) présente des évidements de dents (21) qui précisent ainsi une position dans l'espace d'une dent prothétique (31, 33) insérée dans les évidements de dents, où chaque dent (31, 33) est maintenue par le gabarit de transfert (20) avec une partie de son étendue longitudinale.

7. Arrangement de gabarit de transfert selon l'une des revendications précédentes, **caractérisé en ce que** le gabarit de transfert (20) et la base de la prothèse (10) à l'état assemblé laissent un espace libre (32) par lequel les dents (31, 33) sont entourées à l'état inséré dans les évidements des dents et dont la hauteur correspond à une proportion de la hauteur des dents (31, 33).

8. Arrangement de gabarit de transfert selon l'une des revendications précédentes, **caractérisé en ce que** le gabarit de transfert (20) et la base de la prothèse (10) à l'état assemblé sont maintenus l'un sur l'autre par plusieurs, en particulier trois, points d'appui et sont amenés dans une position relative définie lorsque les dents (31, 33) sont insérées.

9. Arrangement de gabarit de transfert selon l'une des revendications précédentes, **caractérisé en ce que** des évidements de fenêtre du gabarit de transfert sont disposés du côté vestibulaire sur chaque dent, de telle manière à pouvoir contrôler la position en hauteur correcte des dents dans les surfaces intérieures des évidements (21) dans le gabarit de transfert (20).

10. Procédé de fabrication d'un arrangement de gabarit de transfert dentaire selon l'une quelconque des revendications 1 à 9, **caractérisé en ce que** le gabarit de transfert et la base de la prothèse dentaire sont fabriqués avec des dispositifs CAO/FAO.

11. Procédé selon la revendication 10, **caractérisé en ce qu'**une valeur seuil minimale prédéterminée d'une surface adhésive de chaque dent de prothèse sur la base de la prothèse est définie dans le logiciel CAO du dispositif CAO/FAO pour la fabrication de la base de la prothèse, sur la base d'une bibliothèque de dents, où la valeur seuil minimale est en particulier au moins 10 mm2, de préférence au moins 18 mm2, et de manière particulièrement préférée au moins 25 mm2.

12. Procédé selon la revendication 10 ou 11, **caractérisé en ce que** le dispositif CAD/CAM génère le gabarit de transfert (20) sur la base de données de balayage et de données CAO, où lesdites deux données sont obtenues respectivement à partir d'un balayage tridimensionnel de la situation buccale d'un patient et d'une bibliothèque de gabarits dans le logiciel CAO, et génère la base de la prothèse (10) en particulier sur la base des mêmes données de balayage et des données CAD d'une bibliothèque de bases de prothèses dans le logiciel CAO.

13. Procédé selon l'une quelconque des revendications 10 à 12, **caractérisé en ce que** le gabarit de transfert (20) est fabriqué avec des évidements (21) pour des dents (31, 33, 35, 37), en particulier par prototypage rapide ou par fraisage, et **en ce que** les surfaces intérieures des évidements (21) dans le gabarit de transfert (20), qui correspondent aux surfaces extérieures occlusales/incisives des dents (31, 33, 35, 37) sont générées sur la base d'une bibliothèque de dents, où lesdites surfaces extérieures sont stockées dans le dispositif CAO/FAO correspondant en particulier à des dents préfabriquées.

14. Procédé selon l'une quelconque des revendications 11 à 13, **caractérisé en ce que** la valeur seuil varie selon les différents types de dents - incisives, canines, prémolaires et molaires - et une augmentation de la surface de liaison basée sur la bibliothèque de dents est demandée par le logiciel CAO du dispositif CAO/FAO pour une adaptation correspondante de la base de la prothèse (10).

15. Procédé selon l'une des revendications 11 à 14, **caractérisé en ce que** la valeur seuil varie selon les dents différentes, en particulier pour des dents reconstituées avec des longueurs de dents différentes, et pour l'adaptation correspondante de la base de la prothèse (10), un agrandissement de la surface adhésive basé sur la bibliothèque de dents est demandé par le logiciel CAO du dispositif CAO/FAO.

16. Procédé selon l'une des revendications 10 à 15, **caractérisé en ce que**, lors du calcul des surfaces d'expansion dans le gabarit de transfert (20) sur la base de la bibliothèque de dents, une valeur de retrait des dents, liée à la fabrication, en particulier des dents confectionnées, est incluse, où cette valeur est en particulier environ +/- 100 m.

17. Procédé selon l'une des revendications 10 à 16, **caractérisé en ce que** le dispositif CAO/FAO, lors de la détermination de la position en hauteur des dents dans les évidements (11) de la base de la prothèse dentaire, prend en compte à cet endroit une fente de collage d'une épaisseur prédéterminée, en particulier en partie de 0 m à 500 m, de préférence de 50 m à 250 m, **en ce que** la forme extérieure de cette fente est conçue pour être plus grande que la zone cervicale des dents et ainsi la position en hauteur de chaque dent est déterminée exactement.

18. Procédé selon l'une des revendications 10 à 17, **caractérisé en ce que** des dents de prothèse sont maintenues dans les évidements du gabarit de transfert pour le raccourcissement basal de celles-ci.
